# EUROPEAN PATENT APPLICATION

(11) **EP 4 393 644 A1**
(43) Date of publication of application: **03.07.2024**
(21) Application number: 23220648.2
(22) Date of filing: 28.12.2023
(51) Int. Cl.: B24B 19/14, B24B 21/16, B24B 27/00, B24B 49/00, B24B 49/18, B25J 11/00

(54) **ROBOTIC POLISHING SYSTEM AND METHOD FOR USING SAME**

(30) Priority: 27.12.2022 US 202263435538 P
(71) Applicant: PRATT & WHITNEY CANADA CORP., Longueuil, Québec J4G 1A1 (CA)
(72) Inventor: COLLETTE, Jean-Francois, (01BE5) Longueuil, J4G 1A1 (CA); NAULT, Pierre-Luc, (01BE5) Longueuil, J4G 1A1 (CA); WHITTOM, Guillaume, (01BE5) Longueuil, J4G 1A1 (CA); HOANG, Canam, (01BE5) Longueuil, J4G 1A1 (CA); MORIN, Philippe, (01BE5) Longueuil, J4G 1A1 (CA); ROUX, Thomas, (01BE5) Longueuil, J4G 1A1 (CA); FORTIER, Guillaume, (01BE5) Longueuil, J4G 1A1 (CA)
(74) Representative: Dehns

(57) **Abstract**

A polishing system (10) includes an end effector (22) and a controller (14). The end effector (22) includes a polishing arm (38), a motor (40), and a tool head (42). The motor (40) includes a rotatable shaft (88). The tool head (42) extends along a lengthwise axis (92) between and to an inner end (94) and a tip end (96). The inner end (94) is disposed on the polishing arm (38) at the motor (40). The tool head (42) includes a belt tensioner (98) and a roller (100). The belt tensioner (98) is configured to bias the tip end (96) outward from the inner end (94) along the lengthwise axis (92). The tool head (42) is configured to retain an abrasive belt (44) extending between the rotatable shaft (88) and the roller (100). The controller (14) is configured to measure a usage of the abrasive belt (44) for polishing one or more workpieces (1000) and compare the measured usage to a threshold usage value to identify an end-of-life condition is present or absent for the abrasive belt (44).

## Description

This application claims priority to U.S. Patent Appln. No. 63/435,538 filed December 27, 2022.

### TECHNICAL FIELD

This disclosure relates generally to robotic machining systems, more particularly, to systems and methods measuring rotation of an end effector motor for a robotic polishing system.

### BACKGROUND OF THE ART

Robotic machining systems may be used to accomplish one or more machining (e.g., polishing) operations for the manufacture of components. Various robotic machining systems are known in the art. While these known systems have various advantages, there is still room in the art for improvement.

### SUMMARY

It should be understood that any or all of the features or embodiments described herein can be used or combined in any combination with each and every other feature or embodiment described herein unless expressly noted otherwise.

According to an aspect of the present disclosure, a polishing system includes an end effector and a controller. The end effector includes a polishing arm, a motor, and a tool head. The polishing arm includes a motor housing at a distal end of the polishing arm. The motor is mounted on the motor housing. The motor includes a rotatable shaft. The tool head extends along a lengthwise axis between and to an inner end and a tip end. The inner end is disposed on the polishing arm at the motor. The tool head includes a belt tensioner and a roller. The belt tensioner includes a tool extension including the tip end. The belt tensioner is configured to bias the tip end outward from the inner end along the lengthwise axis. The roller is rotatable about a tool center point of the tool head at the tip end. The tool head is configured to retain an abrasive belt extending between the rotatable shaft and the roller. The controller includes a processor in communication with a non-transitory memory storing instructions, which instructions when executed by the processor, cause the processor to measure a usage of the abrasive belt for polishing one or more workpieces and compare the measured usage to a threshold usage value to identify an end-of-life condition is present or absent for the abrasive belt.

In an embodiment of the above, the instructions, when executed by the processor, may further cause the processor to measure the usage of the abrasive belt by measuring lengths of one or more polishing tool paths of the instructions which have been completed for the one or more workpieces by the end effector with the abrasive belt.

In a further embodiment of any of the above, the instructions, when executed by the processor, may further cause the processor to measure the usage of the abrasive belt by normalizing the usage of the abrasive belt using one or both of a speed of the end effector along the one or more polishing tool paths or a rotation speed of the rotatable shaft.

In a further embodiment of any of the above, the end effector may further include a rotation sensor in signal communication with the controller. The rotation sensor may be disposed at the motor housing. The rotation sensor may be configured to measure rotation of the rotatable shaft and generate a rotation sensor signal representative of the measured rotation.

In a further embodiment of any of the above, the instructions, when executed by the processor, may further cause the processor to identify application of the abrasive belt to the one or more workpieces and measure the usage of the abrasive belt by measuring a number of rotations of the rotatable shaft using the rotation sensor only for the identified application of the abrasive belt to the workpiece.

In a further embodiment of any of the above, the instructions, when executed by the processor, may further cause the processor to identify application of the abrasive belt to the workpiece based on expected contact between the abrasive belt and the workpiece using the instructions.

In a further embodiment of any of the above, the instructions, when executed by the processor, may further cause the processor to measure a rotation speed of the rotatable shaft using the rotation sensor signal.

In a further embodiment of any of the above, the instructions, when executed by the processor, may further cause the processor to verify the measured rotation speed of the rotatable shaft by comparing the measured rotation speed to a rotation speed threshold range.

In a further embodiment of any of the above, the instructions, when executed by the processor, may further cause the processor to identify the measured rotation speed is outside of the rotation speed threshold range and generate a notification in response to identification of the measured rotation speed outside of the rotation speed threshold range.

In a further embodiment of any of the above, the motor housing may include a housing body including a top side, a bottom side, a first lateral side, and a second lateral side. The top side may be mounted to the distal end. The motor may be mounted to the housing body at the first lateral side. The rotatable shaft may extend through the housing body at the first lateral side. The rotation sensor may be mounted on the motor housing at the top side. The rotation sensor may be disposed adjacent and spaced from the rotatable shaft.

In a further embodiment of any of the above, the belt tensioner may further include a tool guide and a spring. The tool guide may include the inner end. The tool guide may be mounted to the motor housing. The spring may be positioned between the tool guide and the tool extension. The spring may be configured to bias the tool extension away from the tool guide along the lengthwise axis.

In a further embodiment of any of the above, the tool extension may include an extension body forming an internal bore of the tool extension. The spring and the tool guide may be disposed within the internal bore.

According to another aspect of the present disclosure, a method for measuring abrasive belt wear for an end effector for a polishing system includes polishing one or more workpieces by driving the abrasive belt with a motor of the end effector and applying the abrasive belt to the one or more workpieces, measuring a usage of the abrasive belt for polishing one or more workpieces, comparing the measured usage to a threshold usage value to identify an end-of-life condition is present or absent for the abrasive belt, and stopping the step of polishing the one or more workpieces in response to identifying the end-of-life condition is present for the abrasive belt.

In an embodiment of the above, measuring the usage of the abrasive belt may include measuring the usage of the abrasive belt by measuring lengths of one or more polishing tool paths along the one or more workpieces which have been completed for the one or more workpieces by the end effector with the abrasive belt.

In a further embodiment of any of the above, measuring the usage of the abrasive belt may include normalizing the measured usage of the abrasive belt using one or both of a speed of the end effector along the one or more polishing tool paths or a rotation speed of the rotatable shaft.

In a further embodiment of any of the above, measuring the usage of the abrasive belt may include measuring the usage of the abrasive belt by measuring a number of rotations of the motor using a rotation sensor while the abrasive belt is applied to the one or more workpieces.

In a further embodiment of any of the above, the method may further include measuring a rotation speed of the motor using the rotation sensor, comparing the measured rotation speed to a rotation speed threshold range, identifying the measured rotation speed is outside of the rotation speed threshold range, and generating a notification in response to identification of the measured rotation speed outside of the rotation speed threshold range.

According to another aspect of the present disclosure, a polishing system includes a robotic polishing assembly and a controller. The robotic polishing assembly includes a robotic arm and an end effector. The robotic arm includes a plurality of movable joints extending between and to a base end and a distal end. The end effector is disposed at the distal end. The end effector includes a polishing arm, a motor, and a tool head. The polishing arm includes a motor housing at a distal end of the polishing arm. The motor housing includes a housing body including a top side, a bottom side, a first lateral side, and a second lateral side. The top side is mounted to the distal end. The motor is mounted to the housing body at the first lateral side. The motor includes a rotatable shaft. The rotatable shaft extends through the housing body at the first lateral side. The tool head extends along a lengthwise axis between and to an inner end and a tip end. The inner end is disposed on the polishing arm at the motor. The tool head including a belt tensioner and a roller. The belt tensioner includes a tool extension including the tip end. The belt tensioner is configured to bias the tip end outward from the inner end along the lengthwise axis. The roller is rotatable about a tool center point of the tool head at the tip end. The tool head is configured to retain an abrasive belt extending between the rotatable shaft and the roller. The controller includes a processor in communication with a non-transitory memory storing instructions, which instructions when executed by the processor, cause the processor to measure a usage of the abrasive belt for polishing one or more workpieces and compare the measured usage to a threshold usage value to identify an end-of-life condition is present or absent for the abrasive belt.

In an embodiment of the above, the instructions, when executed by the processor, may further cause the processor to control the robotic polishing assembly to execute a break-in phase for the abrasive belt by applying the abrasive belt to a dummy component prior to measuring the usage of the abrasive belt for polishing the one or more workpieces.

In a further embodiment of any of the above, the instructions, when executed by the processor, may further cause the processor to control the robotic polishing assembly to polish the one or more workpieces with the abrasive belt subsequent to the break-in phase.

The present disclosure, and all its aspects, embodiments and advantages associated therewith will become more readily apparent in view of the detailed description provided below, including the accompanying drawings.

### DESCRIPTION OF THE DRAWINGS

FIG. 1 diagrammatically illustrates a polishing system, in accordance with one or more embodiments of the present disclosure.
FIG. 2 illustrates a perspective view of an end effector for a polishing system, in accordance with one or more embodiments of the present disclosure.
FIG. 3 illustrates another perspective view of an end effector for a polishing system, in accordance with one or more embodiments of the present disclosure.
FIG. 4 illustrates a cutaway, side view of a portion of a tool head for a polishing system end effector, in accordance with one or more embodiments of the present disclosure.
FIG. 5 illustrates a block diagram depicting a method for measuring rotation of an end effector motor for a polishing system, in accordance with one or more embodiments of the present disclosure.

### DETAILED DESCRIPTION

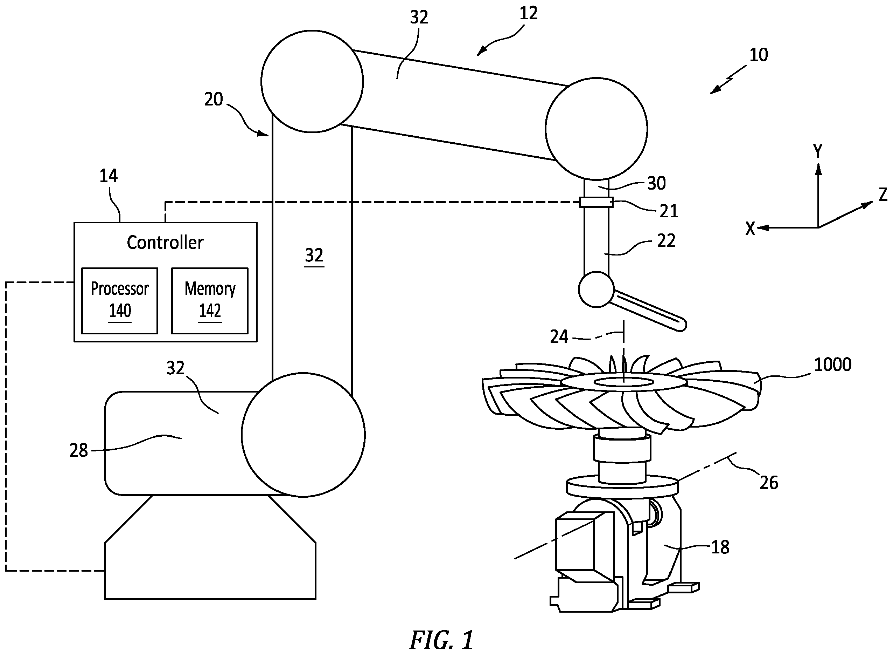

FIG. 1 illustrates a polishing system 10 for use in the manufacture of a workpiece 1000. The present disclosure polishing system 10 may provide particular utility when implemented for polishing workpiece 1000 surfaces having complex curvatures, restrictive machining tolerances, and/or hard metals or metal alloys such as, but not limited to, titanium. As an example, the workpiece 1000 of FIG. 1 is a bladed disk ("blisk") for a gas turbine engine fan for an aircraft propulsion system. The present disclosure, however, is not limited to any particular workpiece 1000 type, configuration, or material. Moreover, while the polishing system 10 is discussed herein with respect to the performance of polishing processes, aspects of the present disclosure may also be applicable to grinding or other machining processes. The polishing system 10 of FIG. 1 includes a robotic polishing assembly 12, and a controller 14. The polishing system 10 may be located within or otherwise include an enclosure (not shown) to contain dust and/or other particulate (e.g., titanium dust) which may be produced during a polishing process and which may present fire and/or explosion risk.

The robotic polishing assembly 12 of FIG. 1 provides automated control of one or more machining tools (e.g., polishing tools) based on coded programming instructions executed by a controller (e.g., the controller 14). The robotic polishing assembly 12 of FIG. 1 includes a workpiece positioning fixture 18, a robotic arm 20, a force control device 21, and an end effector 22. To be clear, this robotic polishing assembly 12 configuration of FIG. 1 is exemplary, and the present disclosure polishing system 10 is not limited to use with the particular robotic polishing assembly 12 configuration of FIG. 1.

The workpiece positioning fixture 18 is configured to securely retain and position the workpiece 1000 for a polishing process and/or another machining process. For example, the workpiece positioning fixture 18 may be configured to rotate the workpiece 1000 a first axis 24. The workpiece positioning fixture 18 may additionally or alternatively be configured to rotate (e.g., tilt the workpiece 1000) about a second axis 26. The second axis 26 may be perpendicular to the first axis 24.

The robotic arm 20 includes a base end 28, a distal end 30, and one or more moveable joints 32. Each movable joint 32 may be moved or otherwise controlled, for example, by an independent servo motor or other actuator (not shown). The distal end 30 is connected to the end effector 22. The robotic arm 20 is configured move the end effector 22 relative to the workpiece 1000 and/or to another component or assembly (e.g., a cleaning assembly) of the polishing system 10. For example, the robotic arm 20 may be configured to move the end effector 22 along an x-axis, a y-axis, and a z-axis, as well as to rotate the end effector 22 relative to the x-axis, the y-axis, and the z-axis (e.g., pitch, yaw, and roll).

The force control device 21 connects the robotic arm 20 to the end effector 22. The force control device 21 may be mounted on the distal end 30 of the robotic arm 30. The force control device 21 may be disposed at (e.g., on, adjacent, or proximate) the end effector 22 and may be directly or indirectly mounted to the end effector 22. The force control device 21 may be configured, for example, as an active contact flange including a pneumatic linear actuator (e.g., a bellow-type pneumatic linear actuator) or other linear actuator configured to translate along an axis (e.g., a single, linear axis) to control a position of the end effector 22 relative to the robotic arm 20. The force control device 21 may additionally include a compressor and/or a pressure control assembly (e.g., a pressure control valve) configured to control an air pressure within the pneumatic linear actuator and, thereby, control a linear position of the pneumatic linear actuator including a fully extended position, a fully retracted position, or a plurality of intermediate linear positions between the fully extended position and the fully retracted position. The force control device 21 may additionally include a pressure sensor configured to measure an air pressure within the pneumatic linear actuator. The force control device 21 may be connected in signal communication with the controller 14, for example, to facilitate positional control of the force control device 21 by the controller 14 and to transmit pressure measurements from the pressure sensor to the controller 14. The pressure measurements from the pressure sensor may facilitate calculation, by the controller 14, of force applied (e.g., to a workpiece) by the end effector 22. Exemplary configurations of the force control device 21 may include, but are not limited to, those sold under the ACF^{®} trademark by FerRobotics Compliant Robot Technology GmbH (Austria).

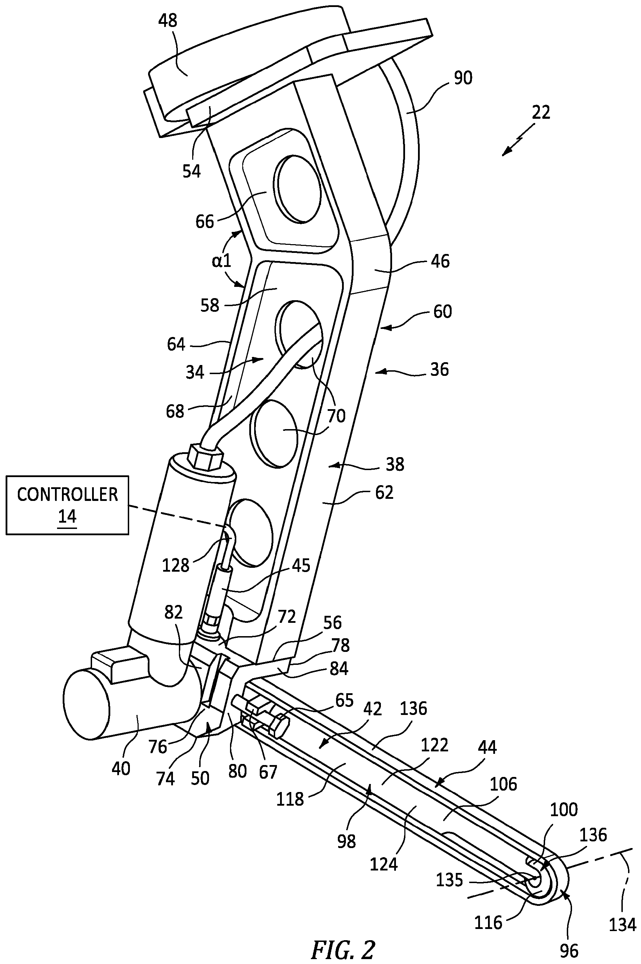

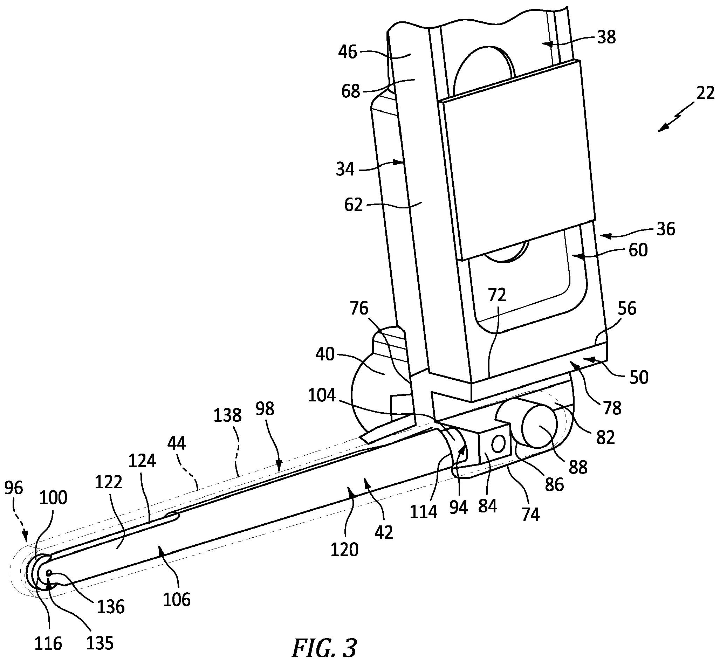

FIGS. 2 and 3 illustrate perspective views of the end effector 22. The end effector 22 of FIGS. 2 and 3 has a first lateral side 34 and a second lateral side 36. The end effector 22 of FIGS. 2 and 3 includes a polishing arm 38, a motor 40, a tool head 42, an abrasive belt 44, and a rotation sensor 45. The polishing system 10 (see FIG. 1) may be configured to selectively attach and detach different end effectors 22 to facilitate polishing system 10 performance of different polishing operations or to replace degraded or faulty end effectors 22.

The polishing arm 38 of FIG. 2 includes an arm body 46, an attachment flange 48, and a motor housing 50. The arm body 46 extends (e.g., lengthwise) between and to a proximate end 54 of the arm body 46 and a distal end 56 of the arm body 46. The arm body 46 of FIG. 2 has a first lateral side 58, a second lateral side 60, a front side 62, and a rear side 64. Each of the first lateral side 58, the second lateral side 60, the front side 62, and the rear side 64 extend between and to the proximate end 54 and the distal end 56. The first lateral side 58 and the second lateral side 60 may respectively correspond with the first lateral side 34 and the second lateral side 36. The arm body 46 may include a first body portion 66 and a second body portion 68. The first body portion 66 may extend from the proximate end 54 to the second body portion 68. The second body portion 68 may extend from the first body portion 66 to the distal end 56. The first body portion 66 and the second body portion 68 may extend transversely relative to one another. For example, the first body portion 66 and the second body portion 68 may form an angle α of the arm body 46, which angle α may be understood to be disposed on an imaginary plane extending through the front side 62 and the rear side 64. The arm body 46 of FIG. 2 is illustrated with an angle α of approximately forty-five degrees (45°), however, the present disclosure is not limited to any particular angle α of the arm body 46. The angle α of the arm body 46 may facilitate positioning of the tool head 42 relative to the workpiece 1000 by the robotic arm 20 (see FIG. 1). The arm body 46 may form one or more apertures 70 extending through the arm body 46, for example, from the first lateral side 58 to the second lateral side 60. The apertures 70 may facilitate a reduction in weight of the arm body 46 while also facilitating access and directing pneumatic conduits, sensors cables, and the like for the end effector 22.

The attachment flange 48 is mounted to or otherwise disposed at (e.g., on, adjacent, or proximate) the proximate end 54. The attachment flange 48 is selectively attachable to the robotic arm 20, for example, at (e.g., on, adjacent, or proximate) the force control device 21.

The motor housing 50 is mounted to or otherwise disposed at (e.g., on, adjacent, or proximate) the distal end 56. The motor housing 50 includes a housing body 80. The motor housing body 80 has a top side 72, a bottom side 74, a first lateral side 76, and a second lateral side 78. The motor housing 50 may be mounted to the distal end 56 at the top side 72. The first lateral side 76 and the second lateral side 78 extend between and to the top side 72 and the bottom side 74. The first lateral side 76 and the second lateral side 78 may respectively correspond with the first lateral side 34 and the second lateral side 36. The housing body 80 of FIGS. 2 and 3 includes a first mount portion 82 and a second mount portion 84. The first mount portion 82 extends along the first lateral side 76. The first mount portion 82 forms a shaft aperture 86 through the first mount portion 82 in a direction from the first lateral side 76 toward the second lateral side 78. The first mount portion 82 is configured to receive and support the motor 40 at (e.g., on, adjacent, or proximate) the first lateral side 76. The second mount portion 84 extends (e.g., laterally extends) from the first mount portion 82 toward the second lateral side 78. The second lateral side 78 is open to allow the abrasive belt 44 to be installed on and removed from the motor 40.

The motor 40 is mounted to or otherwise disposed at (e.g., on, adjacent, or proximate) the motor housing 50. For example, the motor 40 of FIGS. 2 and 3 is mounted on the first mount portion 82 on the first lateral side 76. The motor 40 includes a rotatable shaft 88. The rotatable shaft 88 extends (e.g., laterally extends) through the shaft aperture 86 to an interior of the motor housing 50. The motor 40 is configured to rotate the rotatable shaft 88 to drive the abrasive belt 44 for a polishing process. The motor 40 of FIGS. 2 and 3 is configured as a pneumatic motor, which pneumatic motor is configured to be driven by a pressurized gas (e.g., air) directed to the motor 40 by a pneumatic conduit 90. The use of a pneumatic motor for the motor 40 may eliminate or reduce the occurrence of sparks during motor 40 operation, thereby facilitating improvements in safety for applications of the present disclosure polishing system 10 (see FIG. 1) which may generate quantities of volatile particulate such as titanium or other metal dust. The present disclosure, however, is not limited to the use of a pneumatic motor for the motor 40, and the motor 40 may alternatively be configured, for example, as an electric motor.

Referring to FIGS. 2-4, the tool head 42 extends along a lengthwise axis 92 between and to an inner end 94 of the tool head 42 and a tip end 96 of the tool head 42. The inner end 94 is disposed at (e.g., on, adjacent, or proximate) the polishing arm 38 (e.g., the motor housing 50). The lengthwise axis 92 may extend orthogonally or substantially orthogonally relative to the arm body 46 (e.g., a lengthwise dimension of the second body portion 68). The present disclosure, however, is not limited to this particular orientation of the lengthwise axis 92 relative to the polishing arm 38. For example, the lengthwise axis 92 may be oriented at any suitable angle relative to the arm body 46 including a colinear orientation of the lengthwise axis 92 relative to the arm body 46. The tool head 42 of FIGS. 2-4 includes a belt tensioner 98 and a roller 100. The tool head 42 may additionally include a retaining shoulder screw 65.

The belt tensioner 98 includes a tool guide 104, a tool extension 106, and a biasing member 108. The tool guide 104 is disposed at (e.g., on, adjacent, or proximate) the inner end 94. The tool guide 104 extends (e.g., lengthwise) between and to a first end 110 of the tool guide 104 and a second end 112 of the tool guide 104. The first end 110 is mounted to or otherwise disposed at (e.g., on, adjacent, or proximate) the motor housing 50. For example, the first end 110 of FIGS. 2-4 is mounted (e.g., fixedly mounted) to the second mount portion 84. The tool guide 104 may be configured as a cylindrical body, however, the present disclosure is not limited to any particular shape of the tool guide 104.

The tool extension 106 is disposed at (e.g., on, adjacent, or proximate) the tip end 96. The tool extension 106 extends (e.g., lengthwise) between and to a first end 114 of the tool extension 106 and a second end 116 of the tool extension 106. The tool extension 106 has a first lateral side 118 and a second lateral side 120. The first lateral side 118 and the second lateral side 120 may respectively correspond with the first lateral side 34 and the second lateral side 36. The tool extension 106 includes an extension body 122 extending from the first end 114 to the second end 116. The extension body 122 includes an exterior surface 124. The exterior surface 124 extends between the first end 114 and the second end 116. The exterior surface 124 extends circumferentially about (e.g., completely around) the lengthwise axis 92. For example, the extension body 122 may generally be configured as a cylindrical body.

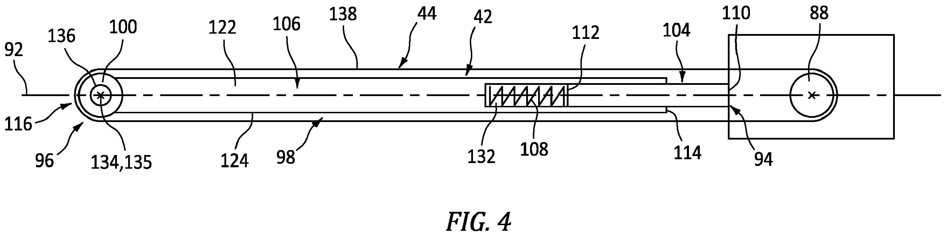

The extension body 122 forms an internal bore 132 as shown, for example, in FIG. 4. The internal bore 132 extends from the first end 114 toward the second end 116. The internal bore 132 is configured to receive the tool guide 104 (e.g., the second end 112) and to facilitate axial translation (e.g., along the lengthwise axis 92) of the tool extension 106 relative to the tool guide 104.

The biasing member 108 of FIG. 4 is disposed within the internal bore 132. The biasing member 108 is disposed between (e.g., axially between) the tool guide 104 (e.g., the second end 112) and the extension body 122, with respect to the lengthwise axis 92. The biasing member 108 is configured to bias the tool extension 106 away from (e.g., axially away from) the tool guide 104 to apply a tension to the abrasive belt 44 installed on the tool head 42. The biasing member 108 of FIG. 4 is configured as a spring, however, the present disclosure is not limited to the use of a spring for the biasing member 108.

The retaining shoulder screw 65 is adjustably mounted to (e.g., screwed into) the motor housing 50 (e.g., the second mount portion 84) adjacent (e.g., radially adjacent with respect to the lengthwise axis 92) the tool head 42 (e.g., the tool guide 104 and the tool extension 106). The retaining shoulder screw 65 may include an enlarged head at a distal end of the retaining shoulder screw 65 opposite the motor housing 50. The extension body 122 may include or otherwise form a guiding feature 67. The guiding feature 67 may be disposed axially coincident with the retaining shoulder screw 65, relative to the lengthwise axis 92. As shown in FIG. 2, for example, the guiding feature 67 may include two arms projecting radially outward from the extension body 122, relative to the lengthwise axis. The two arms may form a U-shape body of the guiding feature 67, which U-shape body may partially circumscribe the retaining shoulder screw 65. In some embodiments, the guiding feature 67 may fully circumscribe the retaining shoulder screw 65. The present disclosure, however, is not limited to the foregoing exemplary configuration of the guiding feature 67. The guiding feature 67 may limit axial movement of the tool extension 106, relative to the lengthwise axis 92. For example, the retaining shoulder screw 65 and the guiding feature 67 may define a fully extended position of the tool extension 106 where the guiding feature 67 contacts the head of the retaining shoulder screw 65, thereby preventing further axial extension of the tool extension 106 from the biasing member 108. The guiding feature 67 may further limit or prevent circumferential movement of the extension body 122, thereby circumferentially fixing or substantially circumferentially fixing the extension body 122 relative to the motor housing 50 and/or the tool guide 104. The axial and circumferential guidance and restraint provided by the retaining shoulder screw 65 and the guiding feature 67 facilitates improved precision and repeatability for polishing operations using the present disclosure polishing arm 38.

The roller 100 is disposed at (e.g., on, adjacent, or proximate) the tip end 96. The roller 100 is configured to rotate about a rotational axis 134 disposed at a tool center point 135 of the tool head 42. The rotational axis 134 may extend (e.g., laterally extend) through the first lateral side 118 and the second lateral side 120. The roller 100 may be configured with a cylindrical shape, or torus shape, or another suitable shape for controlling movement of the abrasive belt 44. The rotational axis 134 (e.g., the tool center point 135) may be formed by a roller body 136 such as, but not limited to, a shaft, a pin, a dowel, or the like, about which the roller 100 may rotate.

The abrasive belt 44 is installed on the tool head 42 in rotational communication with the rotatable shaft 88 and the roller 100. The abrasive belt 44 includes an abrasive outer surface 138 which is configured for polishing, grinding, or otherwise machining one or more surfaces of a workpiece (e.g., the workpiece 1000). The abrasive outer surface 138 may be configured with a degree of abrasiveness (e.g., coarseness, grit, etc.) which may be selected for a particular polishing operation or workpiece surface). The belt tensioner 98 applies a suitable tension to the abrasive belt 44 to secure the abrasive belt 44 on the rotatable shaft 88 and the roller 100 and to allow the abrasive belt 44 to be driven (e.g., moved) along a path between the rotatable shaft 88 and the roller 100 by rotation of the rotatable shaft 88.

The rotation sensor 45 is mounted on the motor housing 50. For example, the rotation sensor 45 may be mounted on the housing body 80 at (e.g., on, adjacent, or proximate) the top side 72. The rotation sensor 45 is disposed at (e.g., on, adjacent, or proximate) the motor 40. The rotation sensor 45 of FIG. 2, for example, is disposed adjacent and spaced from the rotatable shaft 88. The rotation sensor 45 is configured to measure rotation of the motor 40 and/or its rotatable shaft 88. For example, the rotation sensor 45 may be configured to generate an electrical or electronic rotation sensor signal representative of a single rotation of the motor 40 and/or its rotatable shaft 88 (e.g., using a marking or structural deviation of the rotatable shaft 88 at a circumferential position on the rotatable shaft 88). The rotation sensor 45 may be connected in signal communication with the controller 14 by a signal cable 128. The proximity sensor 148 may be configured, for example, as an inductive proximity sensor configured to measure the relative proximity of a metal object. The rotation sensor 45 of the present disclosure, however, is not limited to an inductive rotation sensor.

Referring again to FIG. 1, the controller 14 of FIG. 1 is connected in signal communication with the robotic polishing assembly 12 and the rotation sensor 45. The controller 14 includes a processor 140 and memory 142. The memory 142 is connected in signal communication with the processor 140. The processor 140 may include any type of computing device, computational circuit, or any type of process or processing circuit capable of executing a series of instructions that are stored in the memory 142, thereby causing the processor 140 to perform or control one or more steps or other processes. The processor 140 may include multiple processors and/or multicore CPUs and may include any type of processor, such as a microprocessor, digital signal processor, co-processors, a micro-controller, a microcomputer, a central processing unit, a field programmable gate array, a programmable logic device, a state machine, logic circuitry, analog circuitry, digital circuitry, etc., and any combination thereof. The instructions stored in memory 142 may represent one or more algorithms for controlling aspects of the robotic polishing assembly 12, and the stored instructions are not limited to any particular form (e.g., program files, system data, buffers, drivers, utilities, system programs, etc.) provided they can be executed by the processor 140. The instructions stored in memory 142 may be in the form of G-code, M-code, or another suitable programming language which can be executed by the controller 14 and/or its processor 140. The instructions stored in memory 142 may be generated by computer-aided design (CAD) or computer-aided manufacturing (CAM) software, whereby the physical dimensions of a particular workpiece (e.g., the workpiece 1000) may be translated into instructions (e.g., computer numerical control (CNC) instructions) for execution by the robotic polishing assembly 12. The memory 142 may be a non-transitory computer readable storage medium configured to store instructions that when executed by one or more processors, cause the one or more processors to perform or cause the performance of certain functions. The memory 142 may be a single memory device or a plurality of memory devices. A memory device may include a storage area network, network attached storage, as well a disk drive, a read-only memory, random access memory, volatile memory, non-volatile memory, static memory, dynamic memory, flash memory, cache memory, and/or any device that stores digital information. One skilled in the art will appreciate, based on a review of this disclosure, that the implementation of the controller 14 may be achieved via the use of hardware, software, firmware, or any combination thereof. The controller 14 may also include input and output devices (e.g., keyboards, buttons, switches, touch screens, video monitors, sensor readouts, data ports, etc.) that enable the operator to input instructions, receive data, etc.

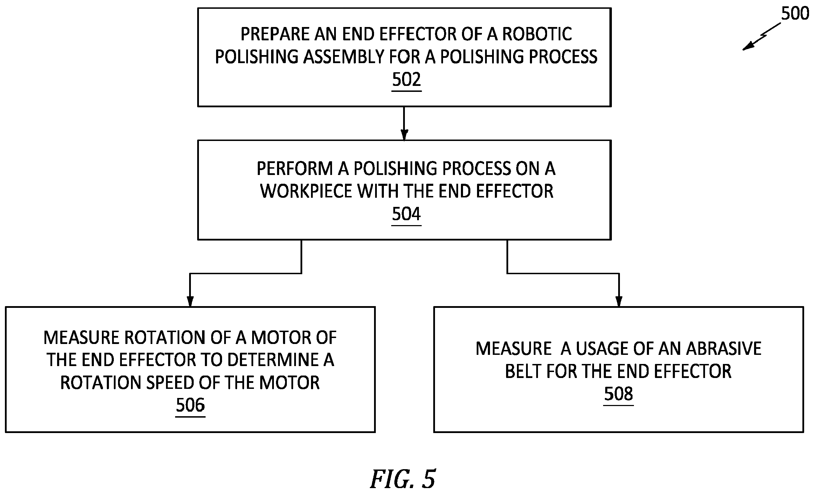

Referring to FIGS. 1, 2, and 5, a Method 500 for measuring rotation of an end effector motor for a polishing system is provided. FIG. 5 illustrates a flowchart for the Method 500. The Method 500 may be performed for the polishing system 10, as described herein. The controller 14 may be used to execute or control one or more steps of the Method 500. For example, the processor 140 may execute instructions stored in memory 142, thereby causing the controller 14 and/or its processor 140 to execute or otherwise control one or more steps of the Method 500 using the robotic polishing assembly 12. However, it should be understood that the Method 500 is not limited to use with the polishing system 10 described herein. Unless otherwise noted herein, it should be understood that the steps of Method 500 are not required to be performed in the specific sequence in which they are discussed below and, in various embodiments, the steps of Method 500 may be performed separately or simultaneously. Further, it should be understood that not all of the steps of the method 500, discussed below, may be required unless otherwise described herein.

Step 502 includes preparing the robotic polishing assembly 12 for a polishing process. Step 502 may include installing a new end effector 22 on the robotic polishing assembly 12. Additionally or alternatively, Step 502 may include installing a new abrasive belt 44 on the tool head 42. A new (e.g., previously unused) abrasive belt may be understood to have a generally unstretched condition relative to an abrasive belt which has previously been used in a polishing or other machining operation. This is because abrasive belts may be expected to experience gradual degradation through usage, which degradation may be exhibited, at least in part, by stretching of the abrasive belt. Positioned on the tool head 42, the new abrasive belt 44 may compress the belt tensioner 98 such that the biasing member 108 (see FIG. 4) is compressed between the tool extension 106 and the tool guide 104. In this condition, the tool extension 106 may be positioned at (e.g., on, adjacent, or proximate) a fully compressed or substantially fully compressed position of the tool extension 106 relative to the tool guide 104. As the abrasive belt 44 is used for polishing operations, the abrasive belt 44 will stretch and the biasing member 108 will bias the tool extension 106 outward (e.g., away from the tool guide 104) to maintain suitable tension of the abrasive belt 44.

An abrasive belt may undergo a series of sequential degradation phases, executed by the controller 14, which are generally described herein as (1) a pre-break-in phase, (2) a break-in phase, and (3) a post-break-in phase. The pre-break-in phase may be characterized by very high rate of stretching of the abrasive belt 44 relative to the usage of the abrasive belt 44 (e.g., polishing usage as a fraction of the useful life for the abrasive belt 44). The usage of the abrasive belt 44 may be measured or otherwise estimated, for example, using a polishing operational time for the abrasive belt 44, a workpiece surface area polished using the abrasive belt 44, or any other suitable indictor of abrasive belt 44 usage. The present disclosure, however, is not limited to any particular methodology for determining or identifying abrasive belt 44 useful life. Step 502 may include operating the polishing system 10 to perform a polishing operation on a dummy component (e.g., a component which is not the workpiece 1000) while the installed abrasive belt 44 is in the pre-break-in phase and/or the break-in phase. The break-in phase may be characterized by a moderate rate of stretching of the abrasive belt 44 relative to the useful life of the abrasive belt 44. The post-break-in phase may be characterized by a low rate of stretching of the abrasive belt 44 relative to the useful life of the abrasive belt 44. The post-break-in phase may encompass the majority of the useful life for the abrasive belt 44.

Step 504 includes performing a polishing process on the workpiece 1000 with the robotic polishing assembly 12 and its end effector 22. Pressurized gas (e.g., air) is supplied to the motor 40, thereby driving the rotatable shaft 88 and, in turn, the abrasive belt 44. The controller 14 may execute a series of instructions (e.g., a CNC polishing program) to control the robotic polishing assembly 12 to polish or otherwise machine one or more surfaces of the workpiece 1000. As the abrasive belt 44 is used during one or more polishing processes, the abrasive belt 44 will experience gradual degradation (e.g., wear). Degradation of the abrasive belt 44 may be exhibited, for example, by stretching of the abrasive belt 44 and/or erosion of the abrasive outer surface 138. After sufficient usage, the abrasive belt 44 may no longer be suitable for further polishing operations.

Step 506 includes measuring rotation of the motor 40 and/or its rotatable shaft 88 to determine a rotation speed (e.g., revolutions per minute (RPM)) of the motor 40 and/or its rotatable shaft 88. For example, the controller 14 may measure the rotation speed of the rotatable shaft 88 using the rotation sensor signal from the rotation sensor 45. The controller 14 may determine the rotation speed based on the measured rotation of the rotatable shaft 88 as a function of time. The instructions (e.g., CNC instructions) executed by the controller 14 (e.g., the processor 140) for performing the polishing process (see Step 504) may include a target rotation speed for the motor 40 and/or its rotatable shaft 88. The rotation speed for the motor 40 and/or its rotatable shaft 88 will control a movement speed of the abrasive belt 44 as the abrasive belt 44 is applied to the workpiece 1000. Step 506 may additionally include verifying the rotation speed of the motor 40 and/or its rotatable shaft 88. For example, the controller 14 may use the measured rotation speed of the motor 40 and/or its rotatable shaft 88 to verify that the motor 40 and/or its rotatable shaft 88 is operating at or near the target rotation speed. The controller 14 may identify a rotation speed threshold range for the measured rotation speed of the motor 40 and/or its rotatable shaft 88. The rotation speed threshold range may include rotation speed values between a minimum threshold value and a maximum threshold value. The minimum threshold value and the maximum threshold value may be identified by the controller 14 based on the target rotation speed and one or more threshold selection criteria. The minimum threshold value and the maximum threshold value may be selected as a proportion of the target rotation speed. For example, the minimum threshold value may be equal to ninety-five percent (95%) of the target rotation speed and the maximum threshold value may be equal to one hundred five percent (105%) of the target rotation speed. The present disclosure, however, is not limited to these exemplary values for the rotation speed threshold range. Of course, acceptable values for the rotation speed threshold range may vary, for example, based on different end effector 22 (motor 40) configurations, abrasive belt 44 configurations, workpiece 1000 polishing criteria (e.g., dimensional tolerances), workpiece 1000 material or materials, etc. Routine experimentation may be performed by a person of ordinary skill in the art to determine a suitable rotation speed threshold range in accordance with and as informed by one or more aspects of the present disclosure. The controller 14 may generate a notification (e.g., a warning message, a warning light, an audible alarm, etc.) for an operator of the polishing system 10 in response to identification of the measured rotation speed outside of the rotation speed threshold range.

Step 508 includes determining a usage (e.g., wear, degradation, etc.) of the abrasive belt 44. Using the instructions (e.g., CNC instructions) for executing the polishing process for one or more workpieces (e.g., the workpiece 1000; see FIG. 1), the controller 14 may measure lengths of the polishing tool paths and/or portions of the polishing tool paths which have been completed by the end effector 22 with the current abrasive belt 44. Using the measured lengths, the controller 14 may measure or otherwise determine a usage of the abrasive belt 44. Accordingly, usage of the abrasive belt 44 may be measured without identifying actual physical contact between the abrasive belt 44 and the workpiece. The controller 14 may normalize the measured usage (e.g., a sum of the measured lengths of the polishing tool paths and/or portions of the polishing tool paths) based on a movement speed of the end effector 22 along the polishing tool paths and/or based on a measured rotation speed of the motor 40 (or the rotatable shaft 88).

Alternatively, the controller 14 may measure a number of rotations of the motor 40 and/or its rotatable shaft 88 in which the abrasive belt 44 (e.g., the presently installed abrasive belt 44) has been applied to a workpiece (e.g., the workpiece 1000 and/or another component machined using the abrasive belt such as, but not limited to, the dummy component) using the rotation sensor signal from the rotation sensor 45. The controller 14 may identify the abrasive belt 44 has been applied to the workpiece based on expected contact between the abrasive belt 44 and the workpiece. For example, the controller 14 may identify an amount of time in which the abrasive belt 44 is expected to have been in contact with the workpiece based on the instructions (e.g., the CNC instructions) for the polishing process (see Step 504). In other words, the controller 14 may identify application of the abrasive belt 44 to the workpiece for portions of an executed polishing process in which the instructions direct the controller 14 to control the robotic polishing assembly 12 to position the abrasive belt 44 in contact with the workpiece. The measured number of rotations of the motor 40 and/or its rotatable shaft 88 may be counted for (e.g., only for) the amount of time in which the abrasive belt 44 is expected or otherwise identified to have been in contact with the workpiece. Accordingly, usage of the abrasive belt 44 may be measured without identifying actual physical contact between the abrasive belt 44 and the workpiece. Of course, the present disclosure method 500 may alternatively include identifying physical contact between the abrasive belt 44 and the workpiece (e.g., using a pressure sensor, force sensor, etc.) and counting a number of rotations of the motor 40 and/or its rotatable shaft 88 for the amount of time in which the abrasive belt 44 has been identified to have been in contact with the workpiece. The measured number of rotations of the motor 40 and/or its rotatable shaft 88 in which the abrasive belt 44 (e.g., the presently installed abrasive belt 44) has been applied to the workpiece may be used to identify the usage of the abrasive belt 44, for example, as a fraction of the expected useful life for the abrasive belt 44.

Step 508 may include identifying an end-of-life condition is present or absent for the abrasive belt 44. For example, the controller 14 may compare the measured usage, described above, to a threshold usage value representing an end-of-life condition of the abrasive belt 44 (e.g., a polishing length of the end effector 22, a number of rotations of the motor 40 and/or its rotatable shaft 88, etc.). The controller 14 may identify the end-of-life condition is present where the measured usage is equal to or greater than the threshold usage value. The controller 14 may identify the end-of-life condition is absent where the measured usage is equal to or less than the threshold usage value. The threshold usage value may be a predetermined value (e.g., stored in memory 142). Of course, values for the threshold usage value may vary, for example, based on different end effector 22 (motor 40) configurations, abrasive belt 44 configurations, workpiece polishing criteria (e.g., abrasive belt 44 speed), workpiece material or materials, etc. The memory 142 may store different values of the threshold usage value for different abrasive belt 44 configurations (e.g., abrasive belt 44 material, abrasive belt 44 coarseness, etc.). For example, the controller 14 may use a first threshold number of rotations for an abrasive belt 44 having a first configuration and the controller 14 may use a second different threshold number of rotations for an abrasive belt 44 having a second configuration, which second configuration is different than the first configuration. Routine experimentation may be performed by a person of ordinary skill in the art to determine a suitable threshold usage value for abrasive belts 44 in accordance with and as informed by one or more aspects of the present disclosure. The controller 14 may control the robotic polishing assembly 12 to stop the polishing process for the workpiece 1000 in response to identification that the end-of-life condition is present for the abrasive belt 44. The controller 14 may generate a notification (e.g., a warning message, a warning light, an audible alarm, etc.) for an operator of the polishing system 10 in response to identification that the end-of-life condition is present for the abrasive belt 44. The controller 14 control the robotic polishing assembly to replace the abrasive belt 44 (e.g., autonomously remove the installed abrasive belt 44 and install a new abrasive belt 44 onto the tool head 42) in response to identification that the end-of-life condition is present for the abrasive belt 44.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A polishing system (10) comprising:
an end effector (22) comprising:
a polishing arm (38) including a motor housing (50) at a distal end (56) of the polishing arm (38);
a motor (40) mounted on the motor housing (50), the motor (40) including a rotatable shaft (88); and
a tool head (42) extending along a lengthwise axis (92) between and to an inner end (94) and a tip end (96), the inner end (94) disposed on the polishing arm (38) at the motor (40), the tool head (42) including a belt tensioner (98) and a roller (100), the belt tensioner (98) including a tool extension (106) including the tip end (96), the belt tensioner (98) configured to bias the tip end (96) outward from the inner end (94) along the lengthwise axis (92), the roller (100) rotatable about a tool center point (135) of the tool head (42) at the tip end (96), the tool head (42) configured to retain an abrasive belt (44) extending between the rotatable shaft (88) and the roller (100); and
a controller (14) including a processor (140) in communication with a non-transitory memory (142) storing instructions, which instructions when executed by the processor (140), cause the processor (140) to:
measure a usage of the abrasive belt (44) for polishing one or more workpieces (1000); and
compare the measured usage to a threshold usage value to identify an end-of-life condition is present or absent for the abrasive belt (44).

2. The polishing system of claim 1, wherein the instructions, when executed by the processor (140), further cause the processor (140) to measure the usage of the abrasive belt (44) by measuring lengths of one or more polishing tool paths of the instructions which have been completed for the one or more workpieces (1000) by the end effector (22) with the abrasive belt (44).

3. The polishing system of claim 1 or 2, wherein the instructions, when executed by the processor (140), further cause the processor (140) to measure the usage of the abrasive belt (44) by normalizing the usage of the abrasive belt (44) using one or both of a speed of the end effector (22) along the one or more polishing tool paths or a rotation speed of the rotatable shaft (88).

4. The polishing system of claim 1, 2 or 3, wherein the end effector (22) further includes a rotation sensor (45) in signal communication with the controller (14), the rotation sensor (45) disposed at the motor housing (50), the rotation sensor (45) configured to measure rotation of the rotatable shaft (88) and generate a rotation sensor signal representative of the measured rotation, optionally wherein the motor housing (50) includes a housing body (80) including a top side (72), a bottom side (74), a first lateral side (76), and a second lateral side (78), the top side (72) mounted to the distal end (56) of the polishing arm (38), the motor (40) mounted to the housing body (80) at the first lateral side (76), the rotatable shaft (88) extending through the housing body (80) at the first lateral side (76), the rotation sensor (45) mounted on the motor housing (50) at the top side (72), the rotation sensor (45) disposed adjacent and spaced from the rotatable shaft (88).

5. The polishing system of claim 4, wherein the instructions, when executed by the processor (140), further cause the processor (140) to identify application of the abrasive belt (44) to the one or more workpieces (1000), and measure the usage of the abrasive belt (44) by measuring a number of rotations of the rotatable shaft (88) using the rotation sensor (45) only for the identified application of the abrasive belt (44) to the workpiece (1000).

6. The polishing system of claim 5, wherein the instructions, when executed by the processor (140), further cause the processor (140) to identify application of the abrasive belt (44) to the workpiece (1000) based on expected contact between the abrasive belt (44) and the workpiece (1000) using the instructions.

7. The polishing system of claim 4, 5 or 6, wherein the instructions, when executed by the processor (140), further cause the processor (140) to measure a rotation speed of the rotatable shaft (88) using the rotation sensor signal.

8. The polishing system of claim 7, wherein the instructions, when executed by the processor (140), further cause the processor (140) to verify the measured rotation speed of the rotatable shaft (88) by comparing the measured rotation speed to a rotation speed threshold range and, optionally, to identify the measured rotation speed is outside of the rotation speed threshold range, and generate a notification in response to identification of the measured rotation speed outside of the rotation speed threshold range.

9. The polishing system of any preceding claim, wherein the belt tensioner (98) further includes a tool guide (104) and a spring (108), the tool guide (104) including the inner end (94), the tool guide (104) mounted to the motor housing (50), the spring (108) positioned between the tool guide (104) and the tool extension (106), the spring (108) configured to bias the tool extension (106) away from the tool guide (104) along the lengthwise axis (92), optionally wherein the tool extension (106) includes an extension body (122) forming an internal bore (132) of the tool extension (106), the spring (108) and the tool guide (104) disposed within the internal bore (132).

10. A method for measuring abrasive belt wear for an end effector (22) for a polishing system (10), the method comprising:
polishing one or more workpieces (1000) by driving an abrasive belt (44) with a motor (40) of the end effector (22) and applying the abrasive belt (44) to the one or more workpieces (1000);
measuring a usage of the abrasive belt (44) for polishing one or more workpieces (1000);
comparing the measured usage to a threshold usage value to identify an end-of-life condition is present or absent for the abrasive belt (44); and
stopping the step of polishing the one or more workpieces (1000) in response to identifying the end-of-life condition is present for the abrasive belt (44).

11. The method of claim 10, wherein measuring the usage of the abrasive belt (44) includes measuring the usage of the abrasive belt (44) by measuring lengths of one or more polishing tool paths along the one or more workpieces (1000) which have been completed for the one or more workpieces (1000) by the end effector (22) with the abrasive belt (44).

12. The method of claim 10 or 11, wherein measuring the usage of the abrasive belt (44) includes normalizing the measured usage of the abrasive belt (44) using one or both of a speed of the end effector (22) along the one or more polishing tool paths or a measured rotation speed of the motor (40).

13. The method of claim 10, 11 or 12, wherein measuring the usage of the abrasive belt (44) includes measuring the usage of the abrasive belt (44) by measuring a number of rotations of the motor (40) using a rotation sensor (45) while the abrasive belt (44) is applied to the one or more workpieces (1000), optionally further comprising:
measuring a rotation speed of the motor (40) using the rotation sensor (45);
comparing the measured rotation speed to a rotation speed threshold range;
identifying the measured rotation speed is outside of the rotation speed threshold range; and
generating a notification in response to identification of the measured rotation speed outside of the rotation speed threshold range.

14. A polishing system (10) comprising:
a robotic polishing assembly (12) including a robotic arm (20) and an end effector (22), the robotic arm (20) including a plurality of movable joints (32) extending between and to a base end (28) and a distal end (30), the end effector (22) disposed at the distal end (30), the end effector (22) comprising:
a polishing arm (38) including a motor housing (50) at a distal end (56) of the polishing arm (38), the motor housing (50) including a housing body (80) including a top side (72), a bottom side (74), a first lateral side (76), and a second lateral side (78), the top side (72) mounted to the distal end (56);
a motor (40) mounted to the housing body (80) at the first lateral side (76), the motor (40) including a rotatable shaft (88), the rotatable shaft (88) extending through the housing body (80) at the first lateral side (76); and
a tool head (42) extending along a lengthwise axis (92) between and to an inner end (94) and a tip end (96), the inner end (94) disposed on the polishing arm (38) at the motor (40), the tool head (42) including a belt tensioner (98) and a roller (100), the belt tensioner (98) including a tool extension (106) including the tip end (96), the belt tensioner (98) configured to bias the tip end (96) outward from the inner end (94) along the lengthwise axis (92), the roller (100) rotatable about a tool center point (135) of the tool head (42) at the tip end (96), the tool head (42) configured to retain an abrasive belt (44) extending between the rotatable shaft (88) and the roller (100); and
a controller (14) including a processor (140) in communication with a non-transitory memory (142) storing instructions, which instructions when executed by the processor (140), cause the processor (140) to:
measure a usage of the abrasive belt (44) for polishing one or more workpieces (1000); and
compare the measured usage to a threshold usage value to identify an end-of-life condition is present or absent for the abrasive belt (44).

15. The polishing system of claim 14, wherein the instructions, when executed by the processor (140), further cause the processor (140) to control the robotic polishing assembly (12) to execute a break-in phase for the abrasive belt (44) by applying the abrasive belt (44) to a dummy component prior to measuring the usage of the abrasive belt (44) for polishing the one or more workpieces (1000) and, optionally, to control the robotic polishing assembly (12) to polish the one or more workpieces (1000) with the abrasive belt (44) subsequent to the break-in phase.
